# EUROPEAN PATENT APPLICATION

(11) **EP 4 218 514 A1**
(43) Date of publication of application: **02.08.2023**
(21) Application number: 23153174.0
(22) Date of filing: 24.01.2023
(51) Int. Cl.: A47J 43/07

(54) **SET OF STAND MIXER BOWLS AND RELATED ASSEMBLIES**

(30) Priority: 28.01.2022 US 202217587263
(71) Applicant: Whirlpool Corporation, Benton Harbor, MI 49022 (US)
(72) Inventor: Mock, Brandon Tyler, 21024 Cassinetta di Biandronno (VA) (IT); McConnell, John W., 21024 Cassinetta di Biandronno (VA) (IT); Myers, John Jay, 21024 Cassinetta di Biandronno (VA) (IT); Murphy, Sayer James, 21024 Cassinetta di Biandronno (VA) (IT)
(74) Representative: Spina, Alessandro

(57) **Abstract**

An assembly (10) of mixing bowls (20,30) for a stand mixer (12) includes a first mixing bowl (20) having a first base (22) configured for mounting with a bowl coupling (14) of the stand mixer (12) and a first body (24) extending from the first base (22) to a first rim (26) disposed at a first height (H1) above the base (22) to define a first interior cavity (28). The assembly (10) further includes a second mixing bowl (30) having a second base (32) configured for mounting with the bowl coupling (14) of the stand mixer (12) and a second body (34) extending from the second base (32) to a second rim (36) disposed at a second height (H2) above the second base (32) to define a second interior cavity (38). The second base (32) and the second body (34) of the second mixing bowl (30) are received within the first mixing bowl (20) with the second rim (36) in supporting contact with the first rim (26) of the first mixing bowl (20).

## Description

### BACKGROUND OF THE DISCLOSURE

The present disclosure generally relates to a set of mixing bowls for a stand mixer, and more specifically, to a set of nesting mixing bowls that are successively supported along outer rims thereof.

Various bowls are available for use in connection with various stand mixers. In one aspect, bowls of different sizes are available for use in processing varying amounts of food, as the efficiency of such processing and/or the general usability of the mixer, can be improved by having a bowl that is not too large for the amount of food being processed. Similarly, larger bowls are needed for larger amounts of food product and/or certain types of food product to prevent spilling or overflow of the bowl. In some instances, it may, however, be inconvenient to store a large number of mixing bowls.

### SUMMARY OF THE DISCLOSURE

According to one aspect of the present disclosure, an assembly of mixing bowls for a stand mixer includes a first mixing bowl having a first base configured for mounting with a bowl coupling of the stand mixer and a first body extending from the first base to a first rim disposed at a first height above the base to define a first interior cavity. The assembly further includes a second mixing bowl having a second base configured for mounting with the bowl coupling of the stand mixer and a second body extending from the second base to a second rim disposed at a second height above the second base to define a second interior cavity. The second base and the second body of the second mixing bowl are received within the first mixing bowl with the second rim in supporting contact with the first rim of the first mixing bowl, and the second height is less than the first height such that the second base is positioned above a portion of the first interior disposed above the first base.

According to another aspect of the present disclosure, a mixing bowl kit for a stand mixer includes a first mixing bowl having a first base configured for mounting with a bowl coupling of the stand mixer and a first body extending from the first base to a first rim disposed at a first height above the base to define a first interior cavity and a second mixing bowl having a second base configured for mounting with the bowl coupling of the stand mixer and a second body extending from the second base to a second rim disposed at a second height above the second base to define a second interior cavity. The second base and the second body of the second mixing bowl are receivable within the first mixing bowl with the second rim in supporting contact with the first rim of the first mixing bowl, the second height being less than the first height such that the second base is positioned above a portion of the first interior above the first base.

According to yet another aspect of the present disclosure, a stand mixer includes a base having a bowl coupling and having a mixer head supported above the bowl coupling. The stand mixer further including a first mixing bowl having a first base releasably coupled with the bowl coupling of the stand mixer and a first body extending from the first base to a first rim disposed at a first height above the base to define a first interior cavity and a second mixing bowl having a second base configured for mounting with the bowl coupling of the stand mixer and a second body extending from the second base to a second rim disposed at a second height above the second base to define a second interior cavity. The second base and the second body of the second mixing bowl are removably received within the first mixing bowl with the second rim in supporting contact with the first rim of the first mixing bowl. The second height being less than the first height such that the second base is positioned above a portion of the first interior disposed above the first base.

These and other features, advantages, and objects of the present disclosure will be further understood and appreciated by those skilled in the art by reference to the following specification, claims, and appended drawings.

### BRIEF DESCRIPTION OF THE DRAWINGS

In the drawings:
FIG. 1 is a perspective view of mixing bowls for a stand mixer assembled in a stack for storage thereof;
FIG. 2 is a side-cross section view of the assembled mixing bowls taken along the line II-II in FIG. 1;
FIG. 3 is a perspective view of the set of mixing bowls in the assembled state on a stand mixer; and
FIG. 4 is a perspective view of the set of mixing bowls with one of the mixing bowls in a use state on the stand mixer.

The components in the figures are not necessarily to scale, emphasis instead being placed upon illustrating the principles described herein.

### DETAILED DESCRIPTION

The present illustrated embodiments reside primarily in combinations of method steps and apparatus components related to a set of mixing bowls for a stand mixer. Accordingly, the apparatus components and method steps have been represented, where appropriate, by conventional symbols in the drawings, showing only those specific details that are pertinent to understanding the embodiments of the present disclosure so as not to obscure the disclosure with details that will be readily apparent to those of ordinary skill in the art having the benefit of the description herein. Further, like numerals in the description and drawings represent like elements.

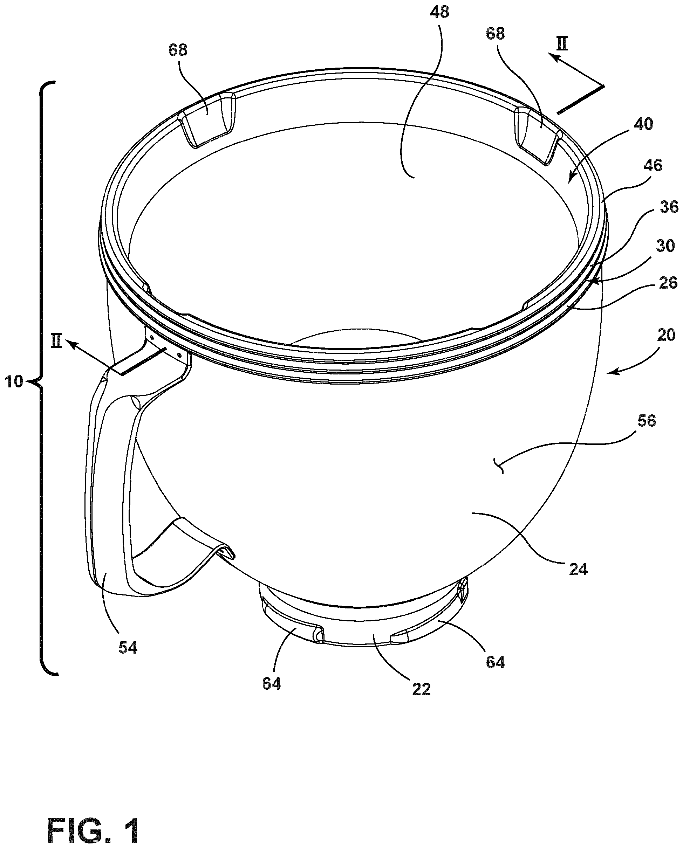

For purposes of description herein, the terms "upper," "lower," "right," "left," "rear," "front," "vertical," "horizontal," and derivatives thereof shall relate to the disclosure as oriented in FIG. 1. Unless stated otherwise, the term "front" shall referto the surface of the element closer to an intended viewer, and the term "rear" shall refer to the surface of the element further from the intended viewer. However, it is to be understood that the disclosure may assume various alternative orientations, except where expressly specified to the contrary. It is also to be understood that the specific devices and processes illustrated in the attached drawings, and described in the following specification are simply exemplary embodiments of the inventive concepts defined in the appended claims. Hence, specific dimensions and other physical characteristics relating to the embodiments disclosed herein are not to be considered as limiting, unless the claims expressly state otherwise.

The terms "including," "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element preceded by "comprises a ... " does not, without more constraints, preclude the existence of additional identical elements in the process, method, article, or apparatus that comprises the element.

Referring to FIGS. 1-4, reference numeral 10 generally designates a set of mixing bowls for a stand mixer 12. The set 10 includes a first mixing bowl 20 having a first base 22 configured for mounting with a bowl coupling 14 of the stand mixer 12 and a first body 24 extending from the first base 22 to a first rim 26 disposed at a first height H1 above the base 22 to define a first interior cavity 28. The set 10 further includes a second mixing bowl 30 having a second base 32 configured for mounting with the bowl coupling 14 of the stand mixer 12 and a second body 34 extending from the second base 32 to a second rim 36 disposed at a second height H2 above the second base 32 to define a second interior cavity 38. The second base 32 and the second body 34 of the second mixing bowl 30 are received within the first mixing bowl 20 in an assembly thereof with the second rim 36 in supporting contact with the first rim 26 of the first mixing bowl 20, and the second height H2 is less than the first height H1 such that the second base 32 is positioned above a portion of the first interior 28 disposed above the first base 22.

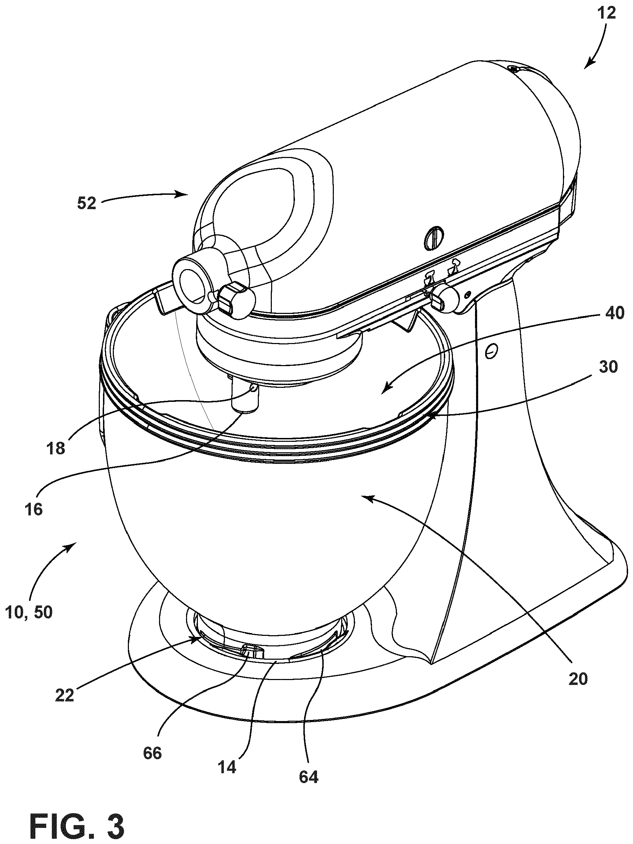

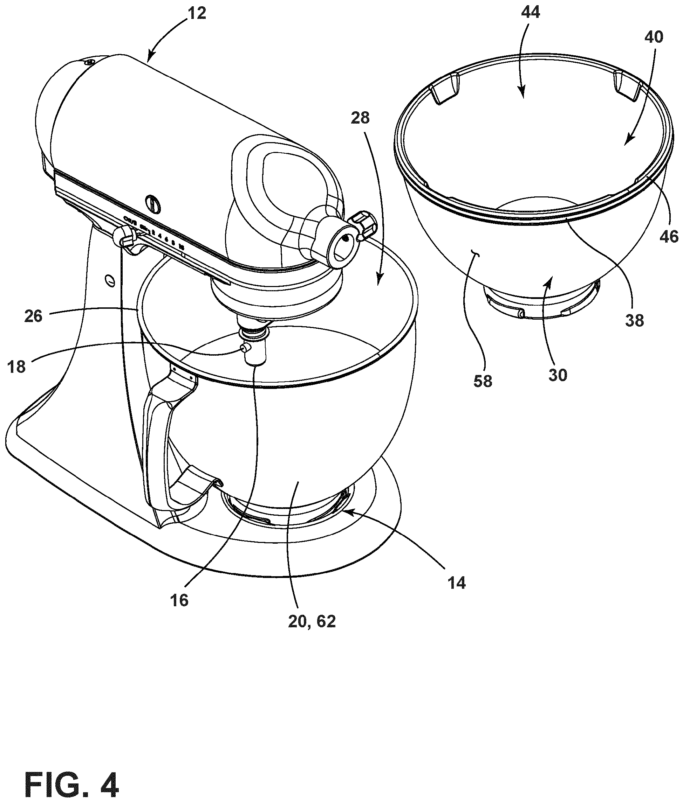

In one aspect of the disclosure, the first and second mixing bowls 20 and 30 are contemplated as a mixing bowl kit for use with the stand mixer 12, as shown herein (FIGS. 3 and 4) or variations thereof. The kit can include an additional mixing bowl 40, as further described below and, optionally, additional bowls that can fit in the assembly as described herein and can be structured according to the principles of the present disclosure. In this respect, the disclosed set of mixing bowls 10 is shown in the Figures as including three such bowls 20, 30, and 40 in three different sizes, each including a base 22, 32, and 42 configured for attachment with the bowl coupling 14 of the stand mixer 12 included in the base 22, 32, and 42 thereof, such that each bowl 20, 30, 40 is separately useable with the stand mixer 12, depending, for example, on the volume of material that the user intends to mix, prepare, or otherwise process. The bowls 20, 30, and 40 are configured to nest in a largest-to-smallest arrangement for storage, including with the largest/outer bowl 20 attached to the bowl coupling 14 of the stand mixer 12. In this manner, due to the nesting arrangement, including as further describe herein, all of the bowls 20, 30, and 40 can be stored with the mixer 12.

To facilitate the disclosed nesting or stacking arrangement, the bowls 20, 30, and 40 included in the set 10 each include outer rims 26, 36, and 46 of a similar respective diameter D1, D2, and D3 such that the bowls 20, 30, and 40 nest together with each successively smaller bowl 30 and 40, for example, resting on the rim 26 and 36, in the example, of the next larger bowl 20 and 30. In this arrangement, the different volumes defined within the respective interiors 28, 38, and 48 of the bowls 20, 30, and 40 are established by the respective heights H1, H2, and H3 of the bowls 20, 30, and 40 such that the bases 32 and 42 of the inner bowls 30 and 40 are suspended above the central portions 23 and 33 (disposed generally above the respective bases 22 and 32 of the bowls 20 and 30) of the next outer, or lower, bowls 20 and 30. In this manner, the first, second, and third heights H1, H2, and H3 of the respective bowls 20, 30, and 40 can be mutually configured to position the central portion 43 of the third interior 48, or whichever bowl is the innermost) below a lower end 16 of an attachment hub 18 of the stand mixer 12, as shown in FIG. 3, such that the set 10 is configurable in a depicted storage state 50 on the stand mixer 12 with the first base 22 mounted with the bowl coupling 14 of the stand mixer 12. This arrangement, additionally, makes it possible to mount the set 10 in the storage state 50 with a mixer head 52 in the downward position for more compact storage of the thusly-configured stand mixer 12.

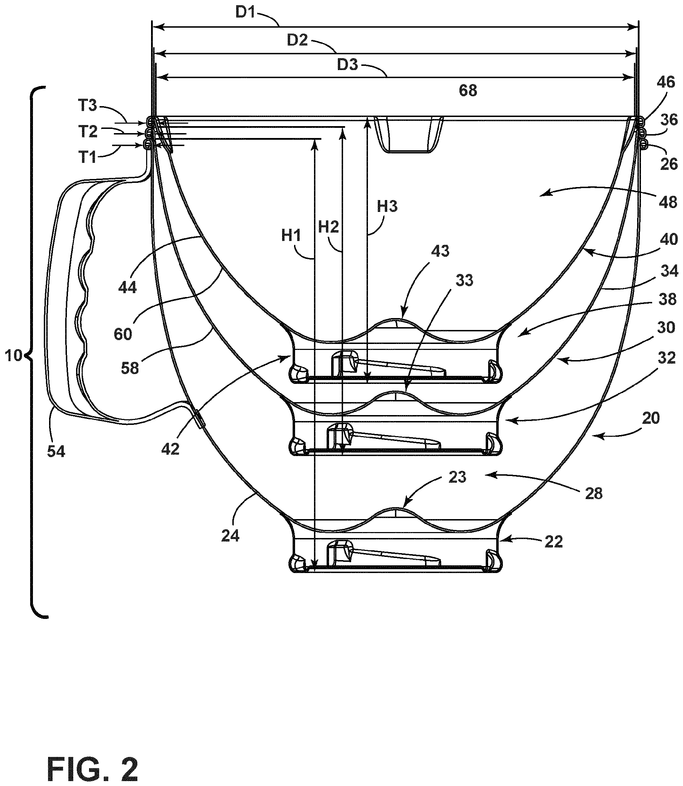

To facilitate the above-described nesting arrangement, particularly with the successive supporting contact of the rim 36 or 46 of an inner bowl 30 or 40 on the rim 26 or 36 of the next outer bowl 20 or 30, each rim 26, 36, and 46 can define a thickness T1, T2, and T3 around the respective perimeter of each body 24, 34, and 44 that can define a diameter D1, D2, and D3 at an intersection of the rim 26, 36, and 46 and the respective body 24, 34, and 44. The diameter D2 and D3 of each successive inner bowl 30 and 40, for example, can be less than the diameter D1 and D2 of the next successive outer bowl 20 and 30 by a distance between predefined clearance distance and less than the thickness of T2 or T3 of the rim 36 or 46. By way of example, the thickness T2 of rim 36 can be between about 3 mm and 6 mm and the clearance distance can be between 0.5 mm and 2 mm to provide the desired overlap of the rims 36 and 26. In the example shown in FIG. 2, the bowl 40 has a relatively larger clearance distance such that the diameter D3 of the body 44 is approximately 4 mm smaller than the diameter D2 of body 34. In this arrangement, the corresponding thickness of the rim 46 is also greater (e.g. between about 5 mm and 8 mm). To provide an acceptably-close fit of bowl 40 with bowl 30 in such an arrangement, bowl 40 can include at least three, or in the current example four stabilizing notches 68 that extend within the clearance space between the diameter D3 and diameter D2 such that bowl 40 is more closely located within bowl 30. Other variations are possible, including ones in which the thicknesses T2 and T3 are substantially (i.e., +/- 10%) the same according to either of the depicted variations. The rim 26 of the outermost bowl 20 can be of a similar structure to those of either or both of the other bowls 30, 40 to provide a supporting surface for rim 36 and/or for visual consistency. In a further aspect, the configuration of the diameters D1 and D3 relative to the thicknesses T1 and T3 respectively associated with bowls 20 and 30 can be sufficient to allow bowl 40 to nest directly with bowl 20, such as when the bowl 30 is in use.

The first, or outermost, mixing bowl 20 can include a handle 54 mounted on an exterior 56 of the first body 24. To facilitate stacking, the inner bowls 30 and 40, etc., may lack the handle 54 of the outer bowl 20 or may, in some implementations, include smaller handles specifically adapted to accommodate the depicted nesting arrangement. In the depicted implementation, the second and third mixing bowls 30 and 40 can each define an uninterrupted outer surface 58 and 60 by way of such bowls 30 and 40 not including a handle. In some respects, the handle 54 is most useful on the outer bowl 20, which is the largest and can accommodate larger volumes of food product of higher weights.

All of bowls 20, 30, and 40 (as well as any additional bowls in further variations) of the set 10 disclosed herein are alternately mountable on the bowl coupling 14 of the stand mixer 12 in a use condition 62 of the set 10. In particular, such condition 62, the rim 26, 36, and 46 are disengaged and separated and bowls 30 and 40 removed from the respective interiors of the other bowls 20 and 30. To facilitate engagement with the bowl coupling 14, which may be a twist-in or bayonet-style coupling, each of the bases 22, 32, and 42 can define a plurality of angled flanges 64 for receipt into a bayonet structure 66 of the bowl coupling 14 of the stand mixer 12. This arrangement allows for selective mounting of any of the mixing bowls 20, 30, or 40 with the bowl coupling 14 of the stand mixer 12, including the example arrangement shown in FIG 4, wherein bowl 30 is coupled with the stand mixer 12.

The invention disclosed herein is further summarized in the following paragraphs and is further characterized by combinations of any and all of the various aspects described therein.

According to another aspect of the present disclosure, an assembly of mixing bowls for a stand mixer includes a first mixing bowl having a first base configured for mounting with a bowl coupling of the stand mixer and a first body extending from the first base to a first rim disposed at a first height above the base to define a first interior cavity. The assembly further includes a second mixing bowl having a second base configured for mounting with the bowl coupling of the stand mixer and a second body extending from the second base to a second rim disposed at a second height above the second base to define a second interior cavity. The second base and the second body of the second mixing bowl are received within the first mixing bowl with the second rim in supporting contact with the first rim of the first mixing bowl, and the second height is less than the first height such that the second base is positioned above a portion of the first interior disposed above the first base

The assembly can further include a third mixing bowl having a third base configured for mounting with the bowl coupling of the stand mixer and a third body extending from the third base to a third rim disposed at a third height above the third base to define a third interior cavity. The third base and the third body of the third mixing bowl can be received within the second mixing bowl with the third rim in supporting contact with the second rim of the second mixing bowl, and the third height can be less than the second height such that the third base is positioned above a portion of the second interior disposed above the second base.

The first, second, and third heights can be mutually configured to position a portion of the third interior disposed above the third base below a lower end of an attachment hub of the stand mixer such that the assembly is configurable in a storage state on the stand mixer with the first base mounted with the bowl coupling of the stand mixer.

Each of the first and second bases can define a plurality of angled flanges for receipt into a bayonet structure of the bowl coupling of the stand mixer for selective mounting of the first mixing bowl or the second mixing bowl with the bowl coupling of the stand mixer.

The first and second heights can be mutually configured to position a portion of the second interior disposed above the second base below a lower end of an attachment hub of the stand mixer such that the assembly is configurable in a storage state on the stand mixer with the first base mounted with the bowl coupling of the stand mixer.

The first and second mixing bowls can be alternately mountable on the bowl coupling of the stand mixer in a use condition of the assembly, with the second rim disengaged from the first rim and the second body positioned outside the first interior.

The first mixing bowl can include a handle mounted on an exterior of the first body.

The second mixing bowl can define an uninterrupted outer surface.

The first rim can define a first thickness around a first perimeter of the first mixing bowl and the first body can define a first diameter at an intersection of the first rim and the first body. The second rim can define a second thickness around a second perimeter of the second mixing bowl and the second body can define a second diameter at an intersection of the second rim and the second body. The second diameter can be less than the first diameter by a distance greater than a predefined clearance distance and less than the thickness of the second rim.

According to yet another aspect, a mixing bowl kit for a stand mixer includes a first mixing bowl having a first base configured for mounting with a bowl coupling of the stand mixer and a first body extending from the first base to a first rim disposed at a first height above the base to define a first interior cavity and a second mixing bowl having a second base configured for mounting with the bowl coupling of the stand mixer and a second body extending from the second base to a second rim disposed at a second height above the second base to define a second interior cavity. The second base and the second body of the second mixing bowl are receivable within the first mixing bowl with the second rim in supporting contact with the first rim of the first mixing bowl, the second height being less than the first height such that the second base is positioned above a portion of the first interior above the first base.

The kit can further include a third mixing bowl having a third base configured for mounting with the bowl coupling of the stand mixer and a third body extending from the third base to a third rim disposed at a third height above the third base to define a third interior cavity, and the third base and the third body of the third mixing bowl can be receivable within the second mixing bowl with the third rim in supporting contact with the second rim of the second mixing bowl, the third height being less than the second height such that the third base is positioned above a portion of the second interior above the second base.

The first, second, and third heights can be mutually configured to position a portion of the third interior disposed above the third base below a lower end of an attachment hub of the stand mixer such that the first and second mixing bowls are configurable in a storage state on the stand mixer with the first base mounted with the bowl coupling of the stand mixer.

Each of the first and second bases can define a plurality of angled flanges for receipt into a bayonet structure of the bowl coupling of the stand mixer for selective mounting of the first mixing bowl or the second mixing bowl with the bowl coupling of the stand mixer.

The first and second heights can be mutually configured to position a portion of the second interior disposed above the second base below a lower end of an attachment hub of the stand mixer such that the first and second mixing bowls are configurable in a storage state on the stand mixer with the first base mounted with the bowl coupling of the stand mixer.

The first and second mixing bowls can be alternately mountable on the bowl coupling of the stand mixer in a use condition of the assembly with the second rim disengaged from the first rim and the second body positioned outside the first interior.

The first mixing bowl can include a handle mounted on an exterior of the first body.

The second mixing bowl can define an uninterrupted outer surface.

The first rim can define a first thickness around a first perimeter of the first mixing bowl, and the first body can define a first diameter at an intersection of the first rim and the first body. The second rim can define a second thickness around a second perimeter of the second mixing bowl, and the second body can define a second diameter at an intersection of the second rim and the second body. The second diameter can be less than the first diameter by a distance greater than a predefined clearance distance and less than the thickness of the second rim.

According to yet another aspect, a stand mixer includes a base having a bowl coupling and having a mixer head supported above the bowl coupling. The stand mixer further including a first mixing bowl having a first base releasably coupled with the bowl coupling of the stand mixer and a first body extending from the first base to a first rim disposed at a first height above the base to define a first interior cavity and a second mixing bowl having a second base configured for mounting with the bowl coupling of the stand mixer and a second body extending from the second base to a second rim disposed at a second height above the second base to define a second interior cavity. The second base and the second body of the second mixing bowl are removably received within the first mixing bowl with the second rim in supporting contact with the first rim of the first mixing bowl. The second height being less than the first height such that the second base is positioned above a portion of the first interior disposed above the first base.

The stand mixer can further include an attachment hub extending downwardly from the mixing head toward the base to a lower end, and the first and second heights can be mutually configured to position a portion of the second interior disposed above the second base below the lower end of the attachment hub such.

It will be understood by one having ordinary skill in the art that construction of the described disclosure and other components is not limited to any specific material. Other exemplary embodiments of the disclosure disclosed herein may be formed from a wide variety of materials, unless described otherwise herein.

For purposes of this disclosure, the term "coupled" (in all of its forms, couple, coupling, coupled, etc.) generally means the joining of two components (electrical or mechanical) directly or indirectly to one another. Such joining may be stationary in nature or movable in nature. Such joining may be achieved with the two components (electrical or mechanical) and any additional intermediate members being integrally formed as a single unitary body with one another or with the two components. Such joining may be permanent in nature or may be removable or releasable in nature unless otherwise stated.

It is also important to note that the construction and arrangement of the elements of the disclosure as shown in the exemplary embodiments is illustrative only. Although only a few embodiments of the present innovations have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter recited. For example, elements shown as integrally formed may be constructed of multiple parts or elements shown as multiple parts may be integrally formed, the operation of the interfaces may be reversed or otherwise varied, the length or width of the structures and/or members or connector or other elements of the system may be varied, the nature or number of adjustment positions provided between the elements may be varied. It should be noted that the elements and/or assemblies of the system may be constructed from any of a wide variety of materials that provide sufficient strength or durability, in any of a wide variety of colors, textures, and combinations. Accordingly, all such modifications are intended to be included within the scope of the present innovations. Other substitutions, modifications, changes, and omissions may be made in the design, operating conditions, and arrangement of the desired and other exemplary embodiments without departing from the spirit of the present innovations.

It will be understood that any described processes or steps within described processes may be combined with other disclosed processes or steps to form structures within the scope of the present disclosure. The exemplary structures and processes disclosed herein are for illustrative purposes and are not to be construed as limiting.

## Claims

1. An assembly (10) of mixing bowls (20, 30) for a stand mixer (12), comprising:
a first mixing bowl (20) including a first base (22) configured for mounting with a bowl coupling (14) of the stand mixer (12) and a first body (24) extending from the first base (22) to a first rim (26) disposed at a first height (H1) above the first base (22) to define a first interior cavity (28); and
a second mixing bowl (30) including a second base (32) configured for mounting with the bowl coupling (14) of the stand mixer (12) and a second body (34) extending from the second base (32) to a second rim (36) disposed at a second height (H2) above the second base (32) to define a second interior cavity (38), the second base (32) and the second body (34) of the second mixing bowl (30) being configured to be received within the first mixing bowl (20) with the second rim (36) in supporting contact with the first rim (26) of the first mixing bowl (20), the second height (H2) being less than the first height (H1) such that the second base (32) is positioned above a portion of the first interior (28) disposed above the first base (22).

2. The assembly (10) of claim 1, further comprising a third mixing bowl (40) including a third base (42) configured for mounting with the bowl coupling (14) of the stand mixer (12) and a third body (44) extending from the third base (42) to a third rim (46) disposed at a third height (H3) above the third base (42) to define a third interior cavity (48), the third base (42) and the third body (44) of the third mixing bowl (40) being configured to be received within the second mixing bowl (30) with the third rim (46) in supporting contact with the second rim (36) of the second mixing bowl (30), the third height (H3) being less than the second height (H2) such that the third base (42) is positioned above a portion of the second interior cavity (38) disposed above the second base (32).

3. The assembly (10) of any of the preceding claims, wherein the first mixing bowl (20) includes a handle (54) mounted on an exterior (56) of the first body (24).

4. The assembly (10) of any of the preceding claims, wherein the second mixing bowl (30) defines an uninterrupted outer surface (58).

5. The assembly (10) of any of the preceding claims, wherein:
the first rim (26) defines a first thickness (T1) around a first perimeter of the first mixing bowl (20) and the first body (24) defines a first diameter (D1) at an intersection of the first rim (26) and the first body (24) ; and
the second rim (36) defines a second thickness (T2) around a second perimeter of the second mixing bowl (30) and the second body (34) defines a second diameter (D2) at an intersection of the second rim (36) and the second body (34), the second diameter (D2) being less than the first diameter (D1) by a distance greater than a predefined clearance distance and less than the thickness of the second rim (36).

6. A stand mixer (12), comprising:
a bowl coupling (14) and a mixer head (52) supported above the bowl coupling (14);
the assembly (10) of said first and second mixing bowls (20,30) of any of the preceding claims, wherein:
the first base (22) of the first mixing bowl (20) is releasably coupled with the bowl coupling (14) of the stand mixer (12); and
the second base (32) and the second body (34) of the second mixing bowl (30) are received within the first mixing bowl (20).

7. The stand mixer (12) of claim 6, further including an attachment hub (18) extending downwardly from the mixer head (52) toward the bowl coupling (14) to a lower end (16), wherein:
the first and second heights (H1, H2) are mutually configured to position a portion of the second interior cavity (38) disposed above the second base (32) below the lower end (16) of the attachment hub (18) such that the assembly (10) is configurable in a storage state on the stand mixer with the first base mounted with the bowl coupling of the stand mixer.

8. The stand mixer (12) of claim 7, when depending from claim 2, wherein the first, second, and third heights (H1, H2, H3) are mutually configured to position a portion of the third interior (48) disposed above the third base (42) below the lower end (16) of the attachment hub (18) when the assembly is in the storage state (50).

9. The stand mixer (12) of any of claims 6-8, wherein each of the first and second bases (22, 32) define a plurality of angled flanges (64) for receipt into a bayonet structure (66) of the bowl coupling (14) of the stand mixer (12) for selective mounting of the first mixing bowl (20) or the second mixing bowl (30) with the bowl coupling (14) of the stand mixer (12).

10. The stand mixer (12) of any of claims 6-9, wherein the first and second mixing bowls (20, 30) are alternately mountable on the bowl coupling (14) of the stand mixer (12) in a use condition of the assembly (10), with the second rim (36) disengaged from the first rim (26) and the second body (34) positioned outside the first interior (28).
